# EUROPEAN PATENT SPECIFICATION

(11) **EP 1 117 319 B1**
(45) Date of publication and mention of the grant of the patent: **23.04.2003**
(21) Application number: 99947850.6
(22) Date of filing: 29.09.1999
(51) Int. Cl.: A47J 31/40

(54) **LOADER FOR AUTOMATIC COFFEE MACHINES**
ZUFÜHRVORRICHTUNG FÜR AUTOMATISCHE KAFFEEMASCHINEN
CHARGEUR POUR MACHINES A CAFE AUTOMATIQUES

(30) Priority: 02.10.1998 IT FI980102 U
(43) Date of publication of application: 25.07.2001
(73) Proprietor: San Remo S.r.l., 31030 Vascon di Carbonera (IT)
(72) Inventor: RIMINUCCI, Giancarlo, I-61020 Pietrarubbia (IT)
(74) Representative: Modiano, Guido, Dr.-Ing.
(86) International application number: IT9900308
(87) International publication number: WO00019874

(56) References cited:
- WO-A-98/20782
- US-A- 4 738 378

## Description

The present invention refers to the sector of automatic machines for espresso coffee, and, in particular, to the device used to insert the coffee powder in the machine. More specifically, the present invention refers to a loader designed for machines using ready-to-use coffee doses, or disks, for ready use.

Various types of loader are currently known on the market, in which the coffee disk is inserted in a tub, which is closed and traversed by hot water to make coffee. The tub may be either fixed - in this case the loading operation consists in inserting the coffee disk in the machine - or mounted on a mobile support that can be extracted from the machine.

In both cases the loaders of known type present some inconveniences about the safety of the loading operation. As a matter of fact, especially in the case of machines provided with automatically activated mobile organs, the operator may involuntarily touch the tub while the boiler is in operation and the closing mechanism may injure the operator's fingers.

Another inconvenience is due to the fact that in the loaders of known type the dispensing function can take place also in case of incorrect or incomplete position of the tub.

US-A-4 738 378 discloses an automatic coffee machine according to the preamble of claim 1.

The purpose of the present invention is to overcome the above inconveniences, offering a loader for automatic coffee machines capable of ensuring the maximum safety for the operator both when the coffee disk is inserted in the tub and when coffee is dispensed.

The above purpose has been reached thanks to a coffee disk loader as defined in claim 1.

The advantages basically consist in the safety ensured to the operator and the easy use of the loader.

Another advantage is represented by the flexibility of use, since the loader can be installed both in automatic and semi-automatic machines.

The advantages of the present invention will become evident through the following description and the enclosed drawings, which are intended for purposes of illustration and not in a limiting sense, whereby:
- Figure 1 is a top view of the loader according to the present invention;
- Figure 2 is a front view of the loader according to the present invention;
- Figure 3 is a bottom view of the loader according to the present invention;
- Figure 4 is a cross-section of Figure 3 with the plane A-A.

With reference to the enclosed figures, in a preferred embodiment of the invention, the loader according to the present invention is made up of a main body (1) comprising an articulation end (3) from which a lid (2) originates, in the shape of a sector of cylindrical wall. The lid (2) is joined to a cylindrical glass (4) separated from the lid (2) by an arm (9). Internally, the glass (4) is shaped as a concave tub (5) featuring a hole (6) in the bottom (an inclined hole in the example described, although it might also be a vertical hole) that communicates with the outside.

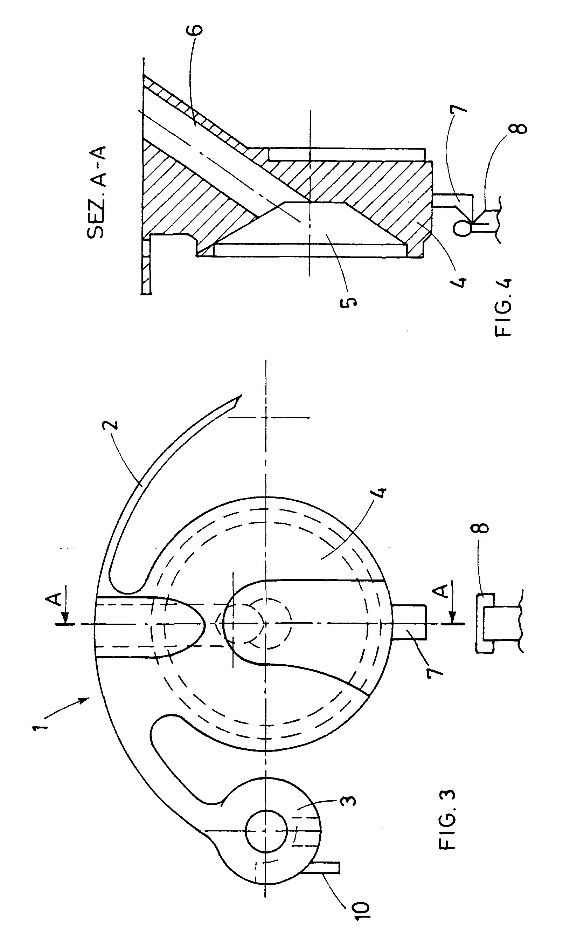

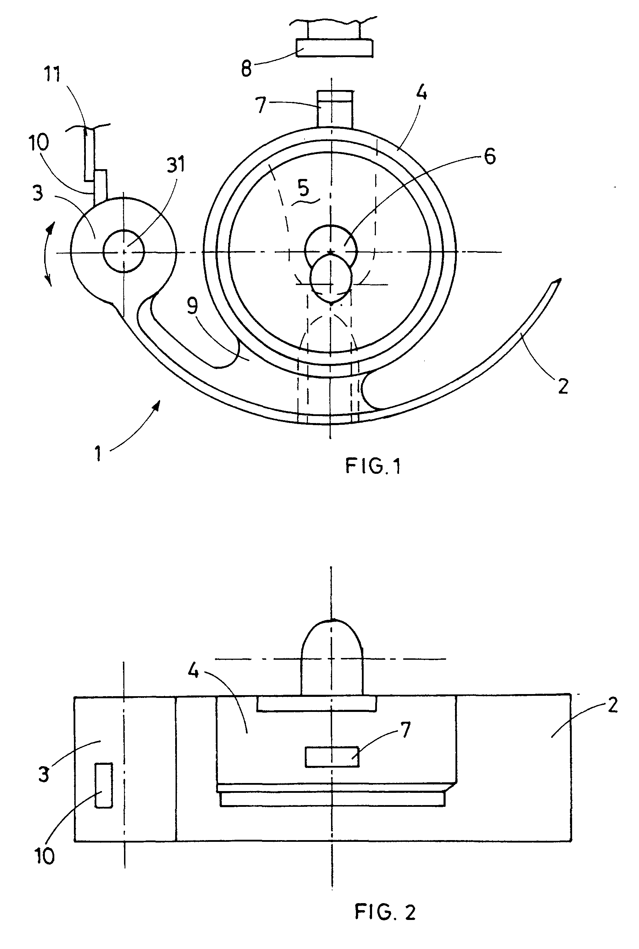

The end (3) features a sensor (10), as shown in Figure 1, which rotates together with the body (1) around the axis (31) of the articulation end (3).

The external surface of the glass (4), on the diametral axis of the glass (4) in orthogonal position with the respect to the line that connects the centers of the articulation (3) and the glass (4), features a tooth (7) designed to engage with a retention mechanism (8), as shown in Figure 1, of the type commonly used to open and close doors of different type that is operated by the simple pressure of the tooth (7) (and therefore of the body (1)) on the retention mechanism (8) fixed inside the machine.

During the operation, the body (1) is joined with the coffee machine by means of a pin - not shown in the Figure - which engages with the cavity (31) of the articulation (3) that rotates on an horizontal plane from the extracted position up to the insertion position in which the glass (4) is housed in the machine compartment in which, according to the specific model of machine, the closing of the tub and the passage of the water for the production of coffee take place. In the latter position, the lid (2) creates a continuous wall with the external wall of the machine, in order to prevent any possible contact of the operator with the internal part of the machine.

When the loader is in the extracted position, the body (1) is rotated towards the outside of the machine, in order to expose the glass (4) and insert the coffee dose in the tub (5), in the form of a disk.

In this position the sensor (10) is detached from the corresponding contact (11) fixed to the machine and prevents the activation of the machine dispensing function.

Once the coffee disk has been inserted, the lid rotates towards the inside of the machine (in counterclockwise direction in Figure 1) until the tooth (7) engages with the mechanism (8) and is held by it. The sensor (10) now touches the contact (11) and activates the dispensing functions, which may be automatic (that is capable of starting when the sensor (10) and the contact (11) meet) or controlled by another command. The water inserted in the tub (5) goes through the coffee disk and flows out through the hole (6).

If the operator involuntarily touches the glass (4) with his fingers, the lid (2) does not close completely and the sensor (10) does not activate the dispensing function, thus avoiding any possible injuries.

To remove and eventually replace the coffee disk, the operator only needs to press the lid (2) again in order to disengage the tooth (7), open the lid and remove the coffee disk from the tub (5).

The loader according to the present invention proves particularly useful in coffee machines that use oil-pressure cylinders to close the coffee tub and create the closed compartment in which water is inserted. As a matter of fact, the cylinders are automatically controlled and do not stop (nor does the dispensing of boiling water) even in the presence of an obstacle, thus involving a potential risk for the operator.

In a second preferred embodiment, the lid (2) is a rectilinear flat panel (in correspondence with a flat wall of the machine) with "L"- shape, in which the horizontal section is represented by a bottom which can be inserted inside the machine, on which the glass (4) is positioned.

This preferred embodiment is provided with proximity sensors located at the end of the insertion stroke of the loader and with a retention mechanism to lock/unlock the loader from the coffee dispensing position.

The loader can be made of heat-resistant plastic material and metal, either in part or as a whole.

The present invention has been described with reference to some preferred embodiments. However, equivalent modifications may be made by experts without leaving the scope of the invention as defined in the claims.

## Claims

1. An automatic coffee machine comprising a loader with a main body (1) comprising an articulation end (3) from which an external lid (2) originates and an internal glass (4) joined to said lid (2), wherein the end (3) of said body (1) is hinged to the machine on a horizontal plane so as to make the glass (4) move from a complete extraction position to a complete insertion position and disappear inside the machine whose external wall creates a continuous wall with that of the lid (2), when in closed position, **characterized in that** the lid (2) is located in a position adjacent to the end (3) and is separated from said glass (4) by an arm (9); said glass (4) housing a tub (5) adapted to contain at least one coffee disk and being provided with a hole (6), on the bottom to let the coffee flow, said end (3) of the body (1) featuring a cylinder with a hole (31), having a vertical axis, inside which the fulcrum pin of the body (1) of the machine is housed, and **in that** position sensors (10) are joined to the body (1) and adapted to activate the coffee dispensing function in the insertion position only.

2. Automatic coffee machine according to claim 1, **characterised in that** the glass (4) has on its external surface, on a diametral axis of the glass (4) which is orthogonal with respect to the line that connects the centers of the hole (31) and the glass (4), a tooth (7) designed to engage with a retention mechanism (8) fixed inside the machine.

3. Automatic coffee machine according to the previous claims, **characterised in that** the position sensors (10), only activate the coffee dispensing function when they are put into contact with corresponding contacts (11) in the machine, said condition only occuring when the glass (4) is completely inserted inside the machine.

## Patentansprüche

1. Automatische Kaffeemaschine, mit einer Beschickungsvorrichtung mit einem Hauptkörper (1), der ein Anlenkende (3), von dem ein Außendeckel (2) ausgeht. und ein Innenglas (4), das mit dem Deckel (2) verbunden ist, aufweist, wobei das Ende (3) des Körpers (1) an die Maschine an einer horizontalen Ebene angelenkt ist, damit das Glas (4) aus einer vollständigen Auszugsposition in eine vollständige Einschubposition bewegbar ist und innerhalb der Maschine verschwindet, deren Außenwand eine ununterbrochene Wand mit der des Deckels (2) in geschlossener Position bildet, **dadurch gekennzeichnet, dass** der Deckel (2) in einer Position nahe dem Ende (3) angeordnet und vom Glas (4) durch einen Arm (9) getrennt ist, wobei das Glas (4) eine Wanne (5) aufnimmt, die mindestens eine Kaffeescheibe enthalten kann und mit einer Öffnung (6) am Boden zum Durchfließen des Kaffees versehen ist, wobei das Ende (3) des Körpers (1) einen Zylinder mit einer Bohrung (31) mit einer vertikalen Achse bildet, innerhalb welchen Zylinders der Gelenkbolzen des Körpers (1) der Maschine aufgenommen ist, und dass Positionssensoren (10) mit dem Körper (1) verbunden sind und die Kaffeeabgabefunktion nur in der Einschubfunktion aktivieren können.

2. Automatische Kaffeemaschine nach Anspruch 1, **dadurch gekennzeichnet, dass** das Glas (4) an seiner Außenfläche an einer diametralen Achse des Glases (4), die orthogonal zur Linie ist, die die Zentren der Bohrung (31) und des Glases (4) verbindet, einen Zahn (7) aufweist, der zur Ineingriffnahme mit einem innerhalb der Maschine angeordneten Sicherungsmechanismus (8) ausgebildet ist.

3. Automatische Kaffeemaschine nach den vorhergehenden Ansprüchen, **dadurch gekennzeichnet, dass** die Positionssensoren (10) die Kaffeeabgabefunktion nur dann aktivieren, wenn sie in Kontakt mit den betreffenden Kontakten (11) in der Maschine gebracht sind, wobei diese Bedingung nur dann eintritt, wenn das Glas (4) in der Maschine vollständig eingesetzt ist.

## Revendications

1. Machine automatique à café, comprenant un organe de chargement ayant un corps principal (1) qui comporte une extrémité d'articulation (3) depuis laquelle provient un couvercle externe (2) et un verre interne (4) raccordé au couvercle (2), dans laquelle l'extrémité (3) du corps (1) est articulée sur la machine dans un plan horizontal afin que le verre (4) puisse se déplacer d'une position d'extraction complète à une position d'insertion complète et disparaisse à l'intérieur de la machine dont la paroi externe crée une paroi continue avec celle du couvercle (2), lorsqu'il est en position fermée, **caractérisée en ce que** le couvercle (2) occupe une position adjacente à l'extrémité (3) et est séparé du verre (4) par un bras (9), le verre (4) logeant une cuvette (5) destinée à contenir au moins un disque de café et ayant un trou (6) placé au fond afin que le café puisse s'écouler, ladite extrémité (3) du corps (1) constituant un cylindre muni d'un trou (31), ayant un axe vertical et à l'antérieur duquel est logée la broche formant pivot du corps (1) de la machine, et, dans cette position, des capteurs (10) sont raccordés au corps (1) et sont destinés à activer la fonction de distribution de café en position d'insertion uniquement.

2. Machine automatique à café selon la revendication 1, **caractérisée en ce que** le verre (4) comporte, à sa surface externe sur un axe diamétral du verre (4) qui est perpendiculaire à la droite qui relie les centres du trou (31) et du verre (4), une dent (7) destinée à coopérer avec un mécanisme de retenue (8) fixé à l'intérieur de la machine.

3. Machine automatique à café selon les revendications précédentes, **caractérisée en ce que** les capteurs de position (10) activent uniquement la fonction de distribution de café lorsqu'ils sont placés au contact de contacts correspondants (11) placés dans la machine, cette condition ne se produisant que lorsque le verre (4) est totalement inséré dans la machine.
